# FASCICULE DE BREVET EUROPEEN

(11) **EP 2 907 927 B1**
(45) Date de publication et mention de la délivrance du brevet: **03.07.2024**
(21) Numéro de dépôt: 15155279.1
(22) Date de dépôt: 16.02.2015
(51) Int. Cl.: E02D 29/12, E04G 15/06, E04B 5/48, F16L 5/02

(54) **DISPOSITIF DE RÉSERVATION DE PASSAGES DE CANALISATIONS**
VORRICHTUNG ZUR AUSSPARUNG VON KANALISATIONSDURCHLÄSSEN
DEVICE FOR RESERVING PIPE PASSAGES

(30) Priorité: 18.02.2014 FR 1451266
(43) Date de publication de la demande: 19.08.2015
(73) Titulaire: Ain Corporation, 01390 Civrieux (FR)
(72) Inventeur: Genevois, David, 01390 Civrieux (FR)
(74) Mandataire: Cabinet Beau de Loménie

(56) Documents cités:
- US-A- 5 230 190
- US-A1- 2004 060 249
- US-A1- 2011 030 309
- US-B1- 6 450 505

## Description

La présente invention concerne le domaine du bâtiment et plus précisément la réalisation d'ouvrages dans lesquels il est nécessaire de former des réservations pour le passage de conduits ou de réseaux de fluides de toutes natures, par exemple réseau de gaz, de plomberie, de chauffage, de ventilation ou d'électricité et désignés dans la suite de la description par canalisations.

La présente invention concerne plus précisément un dispositif de réservation pour le passage de canalisations dans une paroi pris au sens général et désignant les murs et les planchers.

L'objet de l'invention vise également un procédé de formation, à l'aide d'un tel dispositif, de réservations dans une paroi réalisée en un matériau de coulage au sens général et appelé béton dans la suite de la description pour des raisons de clarté.

Lors de la construction d'un bâtiment, il apparaît nécessaire de former des réservations dans les parois de béton à savoir les planchers et/ou les murs du bâtiment, de sorte à permettre le passage de canalisations entre les pièces du bâtiment.

D'une manière classique, les parois (dalles et/ou murs) d'un bâtiment sont réalisées en coulant sur place du béton dans un coffrage. Lors de la coulée du béton, un coffrage de réservation est positionné au niveau de la zone destinée à recevoir les canalisations. Après la prise du béton, le coffrage de réservation est alors retiré lors de l'opération de décoffrage de manière à réaliser une ou plusieurs réservations dans l'épaisseur de la paroi et au travers desquelles passeront les canalisations. Généralement, le coffrage de réservation est réalisé directement sur le chantier, à partir de bois, de polystyrène ou de carton notamment. Après le passage des canalisations au travers de la réservation, il est nécessaire de réaliser un nouveau coffrage puis de couler du béton entre les canalisations afin de combler la trémie.

Ces coffrages de réservation fabriqués sur place ou en atelier ne donnent pas satisfaction en pratique car leur fabrication nécessite un temps de main-d'oeuvre important tout en n'étant pas ajustés au mieux aux dimensions des passages à réaliser. Aussi, la sécurité du chantier n'est plus assurée de manière satisfaisante car lorsque le coffrage de réservation est retiré, la continuité de la paroi et en particulier de la dalle est altérée, de sorte que le déplacement des personnes à proximité de la réservation devient dangereux. Par ailleurs, il s'avère nécessaire, dans un premier temps, de couper localement les armatures métalliques pour la mise en place de ces coffrages et, dans un deuxième temps, de rajouter des armatures lors de l'opération de coulage du béton entre les canalisations afin de combler la trémie. En pratique, l'opération de coulage du béton entre les canalisations constitue une opération longue et délicate à mener à bien pour respecter les règles de construction.

Pour tenter de remédier à ces inconvénients, l'état de la technique a proposé différents dispositifs. Par exemple, le brevet FR 2 712 330 propose un dispositif de réservation en résine armée destiné à rester en place et comportant une plaque munie de fourreaux équipés de bouchons. Après le positionnement du dispositif dans un coffrage, le béton est coulé. Après la prise du béton, les bouchons sont découpés pour permettre le passage des canalisations au travers des fourreaux. Cette solution n'est pas pleinement satisfaisante car le dispositif reste en place dans la paroi après coulage. De plus, il convient de disposer d'un grand nombre de modèles de tels dispositifs afin de s'adapter aux diverses combinaisons possibles pour les canalisations à mettre en place.

Pour s'adapter aux diverses combinaisons possibles pour les canalisations à mettre en place, le brevet EP 2 511 580 propose de réaliser le dispositif de réservation de passages de canalisations sous la forme de plusieurs modules assemblés entre eux à la demande. Chaque module comprend un élément tubulaire présentant un axe longitudinal et supporté extérieurement par un support se présentant sous la forme d'une plaque s'étendant extérieurement et transversalement par rapport à l'axe de l'élément tubulaire. Cette plaque est délimitée extérieurement par quatre côtés contigus équipés de moyens d'assemblage complémentaires pour des modules positionnés sur les côtés dudit module.

Cette solution offre l'avantage de réaliser, à la demande, un dispositif de réservation adapté aux diverses configurations et dimensions des canalisations à mettre en place. Cependant, un tel dispositif de réservation qui est destiné à rester en place après le coulage du béton, constitue un ensemble affectant la résistance mécanique de la paroi ainsi constituée. Par ailleurs, les moyens d'assemblage complémentaires aménagés sur les modules limitent les possibilités de montage des modules entre eux.

Le brevet US 6 450 505 décrit un dispositif en deux parties pour la réservation de passages de canalisations lors du coulage d'une paroi. Selon une variante de réalisation, ce dispositif comporte un élément tubulaire supporté par un support d'ancrage dans le béton s'étendant extérieurement et transversalement par rapport à l'axe de l'élément tubulaire. Ce support d'ancrage comporte deux pattes s'étendant de part et d'autre de l'élément tubulaire et dans lesquelles est aménagée une ouverture s'ouvrant de part et d'autre du support pour assurer le passage du matériau de coulage.

Ce dispositif comporte également une coupelle d'étanchéité présentant une virole borgne tronconique prolongée par une bague d'ancrage dans le matériau de coulage. La coupelle d'étanchéité qui est montée sur l'extrémité de l'élément tubulaire est destinée à recevoir une canalisation après enlèvement du fond de la virole borgne tronconique. Un tel dispositif présente un inconvénient majeur dans la mesure où les deux parties restent dans la paroi après coulage.

Il est à noter que ce brevet US 6 450 505 décrit une autre variante de réalisation pour laquelle l'élément tubulaire ne comporte pas de support d'ancrage et peut ainsi être retiré de la paroi après coulage de la paroi. Cette variante de réalisation présente cependant une difficulté de montage afin que le dispositif de réservation reste positionné correctement lors de l'opération de coulage.

La demande de brevet EP 0 757 142 décrit un coffrage perdu pour former des réservations, comportant deux corps montés tête-bêche et constitués chacun par un boîtier à partir duquel s'étendent des tubes coopérant avec les tubes de l'autre demi-corps. Ces boîtiers de forme rectangulaire sont équipés de pattes élastiques et de cavités de réception, coopérant ensemble pour assurer l'assemblage des boîtiers. Un tel coffrage présente l'inconvénient de rester en place après l'opération de coulage du béton et de constituer un équipement affectant la résistance mécanique de la paroi ainsi constituée.

La présente invention vise à remédier aux inconvénients de l'état de la technique en proposant un dispositif de réservation de passages des canalisations selon la revendication 1 lors du coulage d'une paroi dans un coffrage, un tel dispositif de réservation étant conçu pour s'adapter aux diverses configurations et dimensions des canalisations à mettre en place tout en minimisant leur impact sur la résistance mécanique de la paroi ainsi constituée.

Pour atteindre un tel objectif, le dispositif de réservation selon l'invention comporte au moins un module comprenant un élément tubulaire présentant un axe longitudinal et supporté extérieurement par un support d'ancrage s'étendant extérieurement et transversalement par rapport à l'axe de l'élément tubulaire, en présentant deux faces orientées selon l'axe longitudinal, le support comportant un cadre à au moins quatre côtés, relié ponctuellement avec l'extérieur de l'élément tubulaire pour délimiter avec l'extérieur de l'élément tubulaire, une ouverture s'ouvrant de part et d'autre du support selon ses faces, pour assurer le passage du matériau de coulage. Selon l'invention, l'élément tubulaire est pourvu d'un système d'assemblage assurant une liaison amovible entre le support et un fourreau, monté à l'intérieur de l'élément tubulaire pour pouvoir être retiré du support après l'ancrage du support dans la paroi, le fourreau s'étendant selon l'axe longitudinal sur une longueur au moins égale à l'épaisseur du support.

Après coulage et prise du béton, le fourreau délimite intérieurement un volume dans lequel des canalisations peuvent être passées. Un tel fourreau est avantageusement retiré de la paroi pour limiter le matériau restant en place dans la paroi.

Le dispositif de réservation selon l'invention comporte également en combinaison l'une et/ou l'autre des caractéristiques additionnelles suivantes :
- le fourreau de l'invention comporte deux extrémités opposées dont l'une s'étend dans un plan confondu avec un plan d'extension du support et dont l'autre s'étend dans un plan en saillie par rapport à un autre plan d'extension du support ;
- le support de l'invention comporte des pieds d'appui s'étendant dans le prolongement du cadre à partir de l'une des faces du cadre ;
- le système d'assemblage du fourreau avec l'élément tubulaire est par emboîtement conique ou avec un ajustement serré ;
- le système d'assemblage du fourreau à l'intérieur de l'élément tubulaire comporte des aspérités aménagées sur l'élément tubulaire et/ou sur la surface externe du tube ;
- l'élément tubulaire de l'invention est solidaire du cadre par une structure de liaison ajourée présentant une série d'espaces définissant ensemble l'ouverture s'ouvrant de part et d'autre du support ;
- les côtés du cadre présentent extérieurement des surfaces planes continues d'appui pour d'autres modules de réservation ;
- le cadre du support est pourvu de systèmes d'assemblage pour au moins un autre module de réservation ;
- au moins deux modules de réservation sont en appui sur deux côtés voisins des cadres et solidarisés entre eux à l'aide des systèmes d'assemblage ;
- en tant que systèmes d'assemblage, des agrafes pinçant chacune deux côtés voisins de deux cadres appartenant à des modules différents ;
- les côtés d'un cadre possèdent sur au moins une partie de leur longueur, une épaisseur constante pour le montage d'une agrafe d'assemblage d'un autre module de réservation ;
- le support est équipé d'un couvercle d'obturation de l'une des extrémités du fourreau.

Un autre objet de l'invention est de proposer un procédé selon la revendication 10 pour former une réservation dans une paroi de béton à l'aide d'un dispositif conforme à l'invention.

Ce procédé pour former une réservation dans une paroi de béton à l'aide d'un dispositif conforme à l'invention comporte les étapes suivantes :
- mettre en place au moins un panneau de coffrage ;
- mettre en place au moins une armature ;
- positionner le dispositif de réservation, en contact contre le panneau de coffrage ;
- fixer le dispositif de réservation à l'armature ;
- obturer les extrémités du ou des fourreaux du dispositif de réservation ;
- couler le béton à l'intérieur du ou des panneaux de coffrage et assurer le passage du béton à travers l'ouverture des faces du ou des cadres du dispositif ;
- décoffrer après séchage ;
- retirer les fourreaux de la paroi ainsi formée.

Le procédé selon l'invention consiste également en combinaison l'une et/ou l'autre des caractéristiques additionnelles suivantes :
- avant le positionnement du dispositif de réservation contre le panneau de coffrage :
   - à définir une configuration pour le dispositif de réservation ;
   - à assembler entre eux les modules de réservation selon la configuration choisie ;
   - à procéder à un traçage sur le panneau de coffrage pour le positionnement du dispositif de réservation ;
- à obturer l'extrémité du ou des fourreaux, en fixant sur le panneau de coffrage, des couvercles d'obturation des fourreaux et à positionner le dispositif de réservation, de manière que les extrémités des fourreaux viennent s'engager chacun dans un couvercle d'obturation ;
- à obturer l'extrémité d'un fourreau en le faisant coopérer avec un couvercle d'obturation fixé sur le module de réservation.

Diverses autres caractéristiques ressortent de la description faite ci-dessous en référence aux dessins annexés qui montrent, à titre d'exemples non limitatifs, des formes de réalisation de l'objet de l'invention,
Les **Figures 1** et **2** sont des vues en perspective prises respectivement de l'avant et de l'arrière d'un exemple de réalisation d'un dispositif de réservation comportant un seul module.
La **Figure 3** est une vue de côté de l'exemple de réalisation du dispositif de réservation illustré aux **Fig. 1** et **2****.**
La **Figure 4** illustre un exemple de configuration d'un dispositif de réservation conforme à l'invention comportant sept modules assemblés ensemble.
La **Figure 5** est une vue en perspective d'une agrafe d'assemblage pour des modules conformes à l'invention.
La **Figure 6** est une vue en coupe élévation d'un exemple de mise en oeuvre d'un dispositif de réservation conforme à l'invention pour réaliser un mur.
La **Figure 7** est une vue en coupe de mise en oeuvre d'un dispositif de réservation conforme à l'invention pour réaliser un plancher.

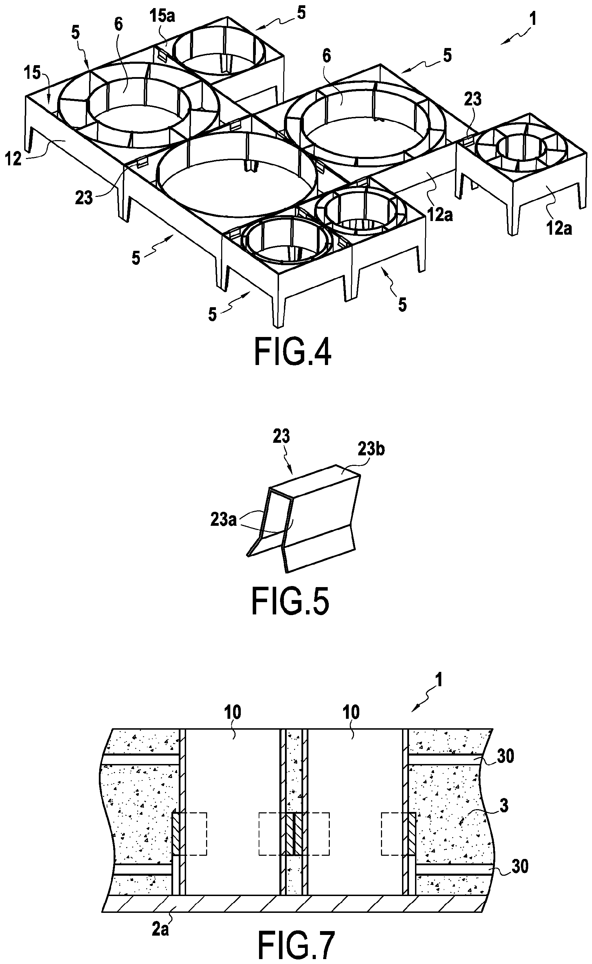

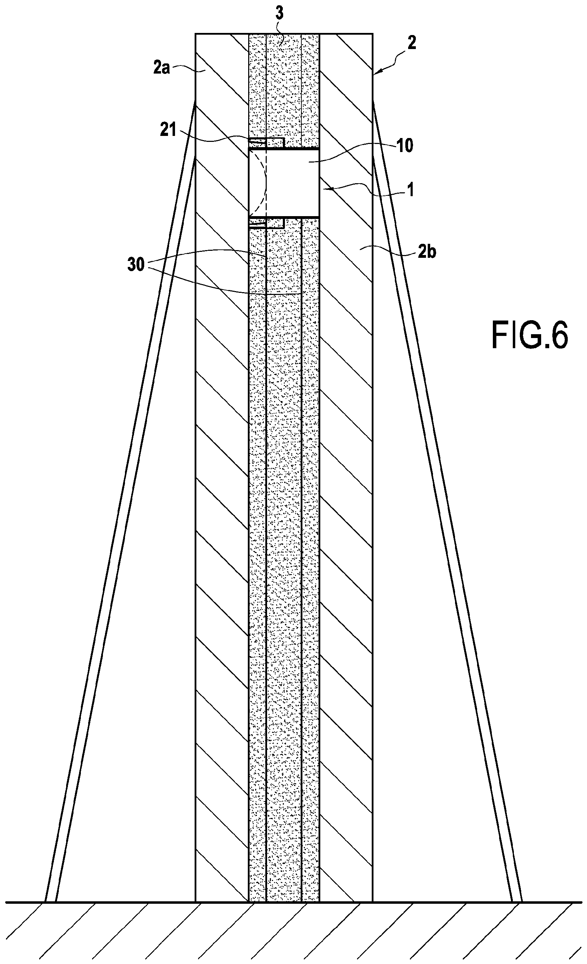

Tel que cela ressort des dessins, l'objet de l'invention concerne un dispositif de réservation **1** pour des passages de canalisations de tous types tels que de plomberie, de chauffage, de ventilation, de gaz ou d'électricité, lors de la construction d'un bâtiment. Ces canalisations qui ne sont pas décrites plus précisément car elles sont bien connues et ne font pas partie précisément de l'objet de l'invention sont, par exemple, des tubes, des câbles, des conduites ou des réseaux de fluides de toutes natures. De manière classique, le dispositif de réservation **1,** selon l'invention, permet de réaliser de tels passages lors du coulage dans un coffrage **2,** de parois **3** formant un mur **(****Fig. 6****)** et/ou un plancher ou une dalle **(****Fig. 7****).** Dans la suite de la description, le terme paroi **3** désignera aussi bien un mur s'élevant verticalement qu'une dalle horizontale. Une telle paroi **3** est obtenue par coulage d'un matériau de coulage au sens général et appelé béton dans la suite de la description et coulé dans un coffrage **2** de tous types connus.

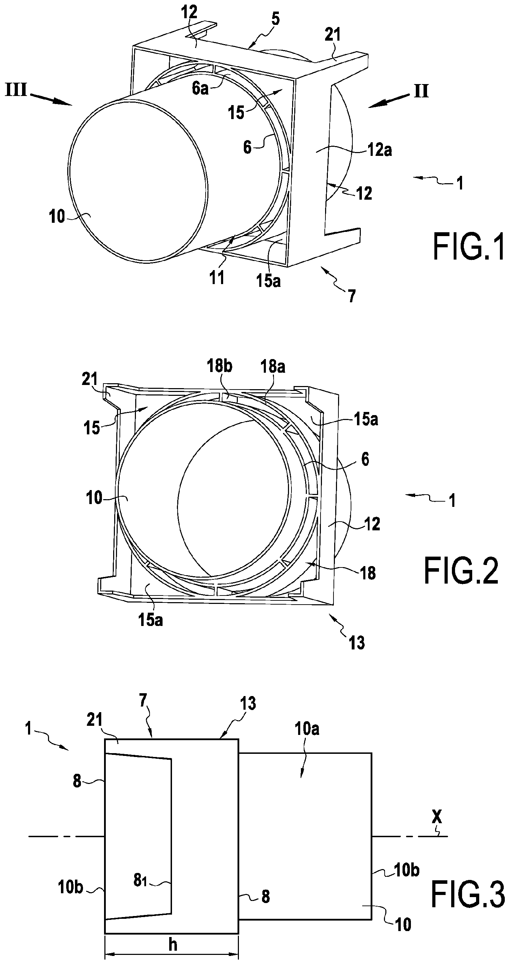

Le dispositif de réservation **1** selon l'invention comporte au moins un module **5** et dans l'exemple illustré aux **Fig. 1** à **3****,** un seul module **5** et sept modules **5** dans l'exemple illustré à la **Fig. 4****.** Chaque module **5** comprend un élément tubulaire **6** présentant un axe longitudinal **X** et supporté extérieurement par un support d'ancrage **7** s'étendant à partir de la surface externe **6a** de l'élément tubulaire et transversalement par rapport à l'axe longitudinal **X** de l'élément tubulaire **6.** Le support **7** présente ainsi deux faces **8** s'étendant transversalement par rapport à l'élément tubulaire **6** en étant orientées selon l'axe longitudinal **X** selon des sens opposés. L'encombrement du support **7** selon l'axe longitudinal **X** correspond à l'épaisseur ou hauteur **h** du support **7.**

Dans l'exemple illustré aux **Fig. 1** à **3****,** l'élément tubulaire **6** se présente sous la forme d'une bague ou d'une virole de forme circulaire fermée, à l'intérieur de laquelle est monté un fourreau **10** à l'aide d'un système d'assemblage **11** de tous types assurant une liaison amovible entre le fourreau **10** et le support **7.** Le système d'assemblage **11** assure une liaison amovible entre le fourreau **10** et l'élément tubulaire **6** pour permettre soit le montage du fourreau **10** sur le support **7** à tout moment choisi par l'utilisateur soit après l'opération de coulage du béton, le retrait du fourreau **10** de la paroi ainsi formée.

Selon une variante préférée de réalisation, le système d'assemblage **11** entre le fourreau **10** et l'élément tubulaire **6** est à emboîtement avec un jeu plus ou moins serré entre le fourreau **10** et l'élément tubulaire **6.** Par exemple, le fourreau **10** et l'élément tubulaire **6** présentent des diamètres pour présenter un ajustement serré à la main, permettant d'engager le fourreau **10** à l'intérieur de l'élément tubulaire **6** afin de positionner le support **7** à une distance fixe déterminée des extrémités du fourreau **10.** Selon une variante de réalisation, le système d'assemblage **11** peut comporter également des godrons ou des aspérités aménagés sur l'élément tubulaire **6** et/ou sur la surface externe **10a** du tube **10.** Selon un autre exemple de réalisation, le système d'assemblage **11** peut consister en un emboîtement conique entre le fourreau **10** et l'élément tubulaire **6.**

Le fourreau **10** est destiné à délimiter le passage pour les canalisations. De manière classique, le fourreau **10** présente une section droite transversale circulaire même si d'autres sections sont possibles telles que carrées par exemple. Dans ce cas, la section de l'élément tubulaire **6** est adaptée à la section du fourreau **10.** La longueur du fourreau **10** est choisie pour correspondre à l'épaisseur de la paroi à couler. Aussi, le fourreau **10** présente une longueur prise selon l'axe longitudinal, au moins égale à l'épaisseur ou la hauteur **h** du support **7.** Le diamètre du fourreau **10** est choisi en fonction du diamètre de la canalisation, qui sera engagée dans l'espace réservé par le fourreau **10.**

Ainsi, selon la variante illustrée aux **Fig. 1** et **3****,** il est avantageux de réaliser une gamme de modules **5** avec des éléments tubulaires **6** présentant des diamètres différents pour permettre le montage de fourreaux **10** de diamètres adaptés aux dimensions des passages de canalisations à réaliser.

Le support **7** est délimité extérieurement par au moins quatre côtés et dans l'exemple illustré sur les dessins, quatre côtés **12** contigus formant un quadrilatère et, en particulier, un carré.

Selon un autre exemple de réalisation, non illustré, le support **7** peut comporter dans chaque angle, un côté de liaison en biais entre deux côtés **12** adjacents de sorte que le support **7** possède alors 8 côtés.

Conformément à l'invention, le support **7** comporte ainsi un cadre **13** à au moins quatre côtés **12,** relié ponctuellement avec l'extérieur de l'élément tubulaire **6** pour délimiter avec l'extérieur de l'élément tubulaire **6,** une ouverture **15** s'ouvrant de part et d'autre du support **7** selon ses faces **8** pour assurer le passage du béton. En d'autres termes, les faces **8** du support **7** sont ouvertes dans la direction de l'axe longitudinal **X,** entre la surface externe **6a** de l'élément tubulaire **6** et la surface interne du cadre **13.** Le béton peut ainsi traverser de part en part le support **7,** en débouchant selon les deux faces opposées **8,** entre la surface externe **6a** de l'élément tubulaire **6** et la surface interne du cadre **13,** en passant par l'ouverture **15.** Le support **7** est ainsi ancré à la paroi ainsi réalisée comme cela sera décrit dans la suite de la description.

Dans l'exemple de réalisation illustré aux **Fig. 1** à **3****,** l'élément tubulaire **6** est solidaire du cadre **13** par une structure de liaison ajourée **18** présentant une série d'espaces **15a** définissant ensemble l'ouverture **15.** Cette structure de liaison ajourée **18** est réalisée de toute manière appropriée pour assurer un maintien du fourreau **10** par rapport au cadre **13** tout en laissant subsister des espaces **15a** de surfaces adaptées pour autoriser le passage du béton au travers du support **7.** De cette manière, cette structure de liaison ajourée **18** permet ainsi de relier le cadre **13** avec l'élément tubulaire **6,** de manière ponctuelle c'est-à-dire en laissant subsister des espaces **15a** pour le passage du béton.

Dans l'exemple illustré aux **Fig. 1** à **3****,** cette structure de liaison ajourée **18** comporte un collier **18a** annulaire, tangent aux côtés **12** et relié aux côtés **12** et à l'élément tubulaire **6** par des ailettes de raccordement **18b** s'étendant radialement. Les espaces libres **15a** sont ainsi aménagés entre le collier annulaire **18a** et les côtés **12** et entre ce collier annulaire **18a** et l'élément tubulaire **6.**

Il est clair que la structure de liaison ajourée **18** apparaissant sur les dessins est donnée uniquement à titre d'illustration et que d'autres formes de réalisation peuvent être données à cette structure.

Selon un mode avantageux de réalisation de l'invention, le support **7** comporte des pieds d'appui **21** s'étendant dans le prolongement du cadre **13** à partir de l'une des faces **8** du support. Selon cette variante de réalisation, l'épaisseur ou la hauteur **h** du support **7** comporte le cadre **13** et les pieds d'appui **21.** Comme cela sera expliqué dans la suite de la description, les pieds d'appui **21** sont destinés à venir en appui contre le coffrage contribuant ainsi au positionnement correct du dispositif **1.** Dans l'exemple illustré, les pieds d'appui **21** s'étendent à partir de chaque coin du support **7** selon une direction parallèle à l'axe longitudinal **X.** Avantageusement, comme cela ressort de la **Fig. 3****,** les extrémités des pieds d'appui **21** s'étendent dans un plan dans lequel s'étend une extrémité **10b** du fourreau **10**.

Tel que cela ressort de la **Fig. 3****,** le cadre **13** s'étend selon l'axe longitudinal **X,** selon une longueur limitée par rapport à la longueur du fourreau **10** prise entre ses 2 extrémités **10b**. Typiquement, l'épaisseur ou la hauteur du cadre **13** pris au niveau des côtés **12** c'est-à-dire entre une face transversale **8** du support **7** et une face transversale opposée **8₁** du cadre **13** (sans prendre en compte les pieds d'appui **21**) est inférieure ou égale à trois fois la longueur du fourreau **10**.

Comme déjà expliqué, le fourreau **10** présente une longueur adaptée pour traverser de part en part l'élément tubulaire **6.** Selon une caractéristique avantageuse de réalisation, l'élément tubulaire **6** possède selon l'axe longitudinal **X,** une longueur égale à la hauteur ou épaisseur du cadre **13** du support **7.** Dans l'exemple illustré, le fourreau **10** s'étend en saillie de part et d'autre du cadre **13** c'est-à-dire en saillie par rapport aux faces transversales **8, 8₁** du support **7.** En d'autres termes, les extrémités **10_{b}** du fourreau **10** sont situées dans des plans confondus avec les plans d'extension du support **7** ou avantageusement situés au-delà du ou des plans d'extension du support **7** c'est-à-dire des faces transversales **8.** Dans le cas où le support **7** est pourvu de pieds d'appui **21,** alors l'une des extrémités **10_{b}** du fourreau **10** s'étend dans un plan confondu avec le plan d'extension du support **7** c'est-à-dire des pieds d'appui **21** tandis que l'autre extrémité **10_{b}** du fourreau **10** s'étend dans un plan en saille par rapport au plan d'extension du support **7.** Tel que cela ressort de la **Fig. 3****,** l'une des extrémités **10_{b}** du fourreau **10** s'étend dans le plan contenant une face transversale **8** du support **7.**

Selon une caractéristique avantageuse de réalisation, les côtés **12** du cadre **13** présentent extérieurement des surfaces planes **12a** d'appui pour d'autres modules de réservation. Ainsi, chaque côté **12** du cadre **13** présente une surface continue plane d'une extrémité à l'autre.

Chaque côté **12** se présente ainsi sous la forme d'une paroi de faible épaisseur présentant une surface externe plane ou lisse **12a** sur laquelle peut être posé et déplacé, un côté appartenant à un autre module **2.** En d'autres termes, toute la surface externe **12a** des côtés **12** est lisse ou plane comme cela apparaît sur les diverses variantes de réalisation illustrées **(****Fig. 1** à **4****).** Avantageusement, chaque côté **12** présente une épaisseur constante en dehors de la jonction avec la structure de liaison ajourée **18,** c'est à dire en vis-à-vis des espaces vides **15a.**

Selon une autre caractéristique avantageuse de l'invention, le cadre **13** du support **7** est pourvu de systèmes d'assemblage **23** pour au moins un autre module de réservation. Ces systèmes d'assemblage **23** permettent de fixer ensemble plusieurs modules **5** avantageusement à partir des côtés **12** des modules en vis-à-vis, en appui les uns contre les autres. Tel que cela ressort clairement de la **Fig. 4****,** le côté **12** d'un module **5** peut être en appui par sa surface plane **12a,** avec la surface plane du côté **12** d'un ou de plusieurs modules **5.** Il est à noter que la surface plane des côtés **12** permet de positionner, à volonté, les modules **5** les uns par rapport aux autres, pour s'adapter aux différentes configurations pour les passages de gaine. Ainsi, chaque module **5** peut prendre n'importe quelle position le long d'un autre module.

Les systèmes d'assemblage **23** peuvent être réalisés de toute manière appropriée. Par exemple, les systèmes d'assemblage **23** peuvent être des liens ou des cordons permettant d'attacher ensemble deux modules **5** par leurs parois en contact et en passant dans les espaces vides **15a.** Selon une variante avantageuse de réalisation illustrée aux **Fig. 4** et **5****,** les systèmes d'assemblage **23** sont des agrafes pinçant chacune deux côtés **12** voisins de deux cadres appartenant à des modules différents. Chaque agrafe **23** se présente sous la forme d'une pince à deux mâchoires élastiques **23a** reliées entre elles par une âme **23b** d'épaisseur sensiblement égale à deux épaisseurs d'un côté **12.** Chaque agrafe **23** est ainsi positionnée pour pincer deux côtés **12** en appui l'un contre l'autre, en étant engagé partiellement au niveau des espaces vides **15a.**

La mise en œuvre du dispositif de réservation **1** conforme à l'invention pour former une réservation dans une paroi de béton découle directement de la description qui précède.

De manière classique, le procédé pour former une réservation dans une paroi de béton comporte plusieurs étapes connues à savoir la mise en place d'un panneau de coffrage **2a** et d'une ou plusieurs armatures **30** selon les règles classiques de la construction **(****Fig. 6**, 7). Ces étapes qui sont bien connues ne sont pas décrites plus précisément.

Le procédé consiste ensuite à positionner le dispositif de réservation **1** sur le panneau de coffrage **2a** en obturant l'extrémité du ou des fourreaux **10.** Selon une variante préférée de réalisation, la configuration des modules **5** composant le dispositif de réservation **1** est définie préalablement à sa mise en place dans le coffrage. Typiquement, il peut être envisagé de réaliser en atelier ou usine, l'assemblage des modules **5** pour correspondre en position et en dimensions, aux passages des canalisations voire aussi aux modules de réservation **5** qui apparaissent sur le plan de construction. Ainsi, selon la configuration des passages des canalisations à obtenir, les modules de réservation **5** sont assemblés entre eux préalablement à leur mise à disposition sur le chantier en étant équipés ou non des fourreaux.

Il est à noter qu'il peut être envisagé d'utiliser un module **5** sans l'équiper d'un fourreau **10** afin de jouer un rôle d'entretoise pour des modules **5** équipés de fourreaux **10**.

Le procédé consiste ensuite à réaliser un traçage sur le panneau de coffrage **2a** pour le positionnement du dispositif de réservation **1.** Le dispositif de réservation **1** est fixé par tous moyens appropriés à l'armature **30** dans une position où l'extrémité du ou des fourreaux **10** située du côté du coffrage est obturée. Selon une variante de réalisation, l'obturation des fourreaux **10** est obtenue par la mise en contact de l'extrémité du ou des fourreaux sur le coffrage. Selon une autre variante de réalisation, l'obturation de l'extrémité du ou des fourreaux **10** est réalisée à l'aide de couvercles d'obturation. Par exemple, ces couvercles d'obturation peuvent être montés sur l'extrémité des fourreaux **10** ou être fixés sur le panneau de coffrage **2a,** par tous moyens appropriés, comme par aimantation. Selon cette variante de réalisation **1,** le procédé consiste à positionner le dispositif de réservation **1** de manière que les extrémités des fourreaux **10** viennent s'engager chacun dans un couvercle d'obturation fixé sur le panneau de coffrage.

Selon une variante avantageuse de réalisation, un couvercle d'obturation est fixé sur le support **7** de manière à ce que lors du montage du fourreau **10** sur le support **7,** une extrémité **10b** du fourreau vienne s'engager dans le couvercle d'obturation supporté par le support **7.** Le couvercle d'obturation est maintenu par tous les moyens appropriés au support **7,** à l'aide par exemple de pattes de liaison entre le couvercle et le support **7.**

Avantageusement, le couvercle d'obturation est fixé pour s'étendre selon une face transversale du support **7** et en particulier dans le plan d'extension des pieds d'appui **21** de manière à venir en appui sur le panneau de coffrage. Cette solution présente l'avantage de pré-équiper le module d'un couvercle d'obturation destiné à coopérer avec l'extrémité d'un fourreau **10.**

Il est à noter que les modules **5** sont montés de manière que les pieds **21** se trouvent en appui contre le panneau de coffrage **2a** conférant une stabilité au module **5.** Par ailleurs, la mise en appui des pieds **21** contre le panneau de coffrage **2a** peut être mis à profit pour assurer la mise en place des fourreaux **10** par rapport au support **7** jusqu'à la mise en butée de l'extrémité des fourreaux contre le panneau de coffrage **2a.**

Le procédé selon l'invention consiste à obturer également l'autre extrémité du ou des fourreaux **10**.

Cette obturation de l'autre extrémité des fourreaux **10** peut être réalisée par un couvercle ou par le panneau de coffrage **2b** mis en oeuvre dans le cas de la réalisation d'un mur **(****Fig. 6****).**

Le procédé selon l'invention consiste ensuite à couler le béton à l'intérieur du ou des panneaux de coffrage **2a, 2b,** c'est-à-dire entre les panneaux de coffrage **2a, 2b** pour la réalisation d'un mur ou au-dessus du panneau de coffrage **2b** de fond pour la réalisation d'un plancher. Bien entendu, cette opération est réalisée pour assurer le passage du béton à travers l'ouverture **15** des faces du ou des cadres du dispositif **1.** Compte tenu des ouvertures **15** présentées par les supports **7,** le dispositif de réservation n'affecte pas ou peu la résistance mécanique de la paroi **3** ainsi constituée.

Le procédé consiste ensuite à décoffrer après séchage en enlevant le ou les panneaux de coffrage **2a, 2b.** Le procédé consiste ensuite à retirer les fourreaux **10** de la paroi ainsi formée. Seuls les supports **7** restent ancrés dans la paroi **3.**

L'invention n'est pas limitée aux exemples décrits et représentés car diverses modifications peuvent y être apportées sans sortir de son cadre tel que défini par les revendications annexées.

## Revendications

1. **-** Dispositif de réservation de passages de canalisations lors du coulage d'une paroi dans un coffrage, comportant au moins un module (**5**) comprenant une bague tubulaire (**6**) présentant un axe longitudinal (**X**) et supportée extérieurement par un support d'ancrage (**7**) s'étendant extérieurement et transversalement par rapport à l'axe de la bague tubulaire, en présentant deux faces transversales (**8**) orientées selon l'axe longitudinal, le support (**7**) comportant un cadre (**13**) à au moins quatre côtés (**12**), relié ponctuellement avec l'extérieur de la bague tubulaire (**6**) qui est solidaire du cadre (**13**) par une structure de liaison ajourée (**18**) présentant une série d'espaces (15a) définissant ensemble une ouverture (**15**) s'ouvrant de part et d'autre du support selon ses faces (**8**), pour assurer le passage du matériau de coulage, le support (**7**) comportant des pieds d'appui (**21**) s'étendant dans le prolongement du cadre (**13**) à partir de l'une des faces (**8**) du cadre, la bague tubulaire (**6**) étant pourvue d'un système d'assemblage (**11**) assurant une liaison amovible entre le support (**7**) et un fourreau (**10**) comportant deux extrémités opposées (**10b**), le dispositif comportant le fourreau (**10**) et la bague tubulaire (**6**) étant pourvue en tant que système d'assemblage (**11**), d'une surface interne pour l'emboîtement du fourreau (**10**) monté à l'intérieur de la bague tubulaire (**6**) pour pouvoir être retiré du support (**7**) après l'ancrage du support dans la paroi, le fourreau (**10**) s'étendant selon l'axe longitudinal sur une longueur au moins égale à l'épaisseur du support (**7**) avec l'une des extrémités s'étendant dans un plan confondu avec la face transversale (8) du support contenant l'extrémité des pieds d'appui (21) et dont l'autre extrémité s'étend dans un plan en saillie par rapport à la face transversale (8) opposée.

2. **-** Dispositif de réservation selon la revendication 1, **caractérisé en ce que** le système d'assemblage **(11)** du fourreau **(10)** avec la bague tubulaire (**6**) est par emboîtement conique ou avec un ajustement serré.

3. **-** Dispositif de réservation selon l'une des revendications 1 à 2, **caractérisé en ce que** le système d'assemblage **(11)** du fourreau **(10)** à l'intérieur de la bague tubulaire (**6**) comporte des aspérités aménagées sur la bague tubulaire (**6**) et/ou sur la surface externe (**10ₐ**) du tube (**10**).

4. **-** Dispositif de réservation selon l'une des revendications 1 à 3, **caractérisé en ce que** les côtés (**12**) du cadre (**13**) présentent extérieurement des surfaces planes continues d'appui (**12a**) pour d'autres modules de réservation (**5**).

5. **-** Dispositif de réservation selon l'une des revendications 1 à 4, **caractérisé en ce que** le cadre (**13**) du support (**7**) est pourvu de systèmes d'assemblage (**23**) pour au moins un autre module de réservation.

6. **-** Dispositif de réservation selon l'une des revendications 1 à 5, **caractérisé en ce qu'**il comporte au moins deux modules de réservation (**5**) en appui sur deux côtés voisins (**12**) des cadres et solidarisés entre eux à l'aide des systèmes d'assemblage (**23**).

7. **-** Dispositif de réservation selon les revendications 5 ou 6, **caractérisé en ce qu'**il comporte en tant que systèmes d'assemblage (**23**), des agrafes pinçant chacune deux côtés voisins de deux cadres appartenant à des modules différents.

8. **-** Dispositif de réservation selon la revendication 7, **caractérisé en ce que** les côtés (**12**) d'un cadre (**13**) possèdent sur au moins une partie de leur longueur, une épaisseur constante pour le montage d'une agrafe (**23**) d'assemblage d'un autre module de réservation.

9. **-** Dispositif de réservation selon l'une des revendications 1 à 8, **caractérisé en ce que** le support (**7**) est équipé d'un couvercle d'obturation de l'une des extrémités (**10b**) du fourreau **10**, s'étendant selon une face transversale du support (**7**).

10. **-** Procédé pour former une réservation dans une paroi de béton à l'aide d'un dispositif conforme à l'une des revendications 1 à 9, **caractérisé en ce qu'**il comporte les étapes suivantes :
- mettre en place au moins un panneau de coffrage (**2a**) ;
- mettre en place au moins une armature (**30**) ;
- positionner le dispositif de réservation (1) selon l'une des revendications 1 à 9, en contact contre le panneau de coffrage ;
- fixer le dispositif (**1**), de réservation à l'armature ;
- obturer les extrémités du ou des fourreaux (**10**) du dispositif de réservation (**1**) ;
- couler le béton à l'intérieur du ou des panneaux de coffrage (**2a**, **2b**) et assurer le passage du béton à travers l'ouverture (**15**) des faces du ou des cadres (**13**) du dispositif (**1**) ;
- décoffrer après séchage ;
- retirer les fourreaux (**10**), de la paroi ainsi formée.

11. **-** Procédé selon la revendication 10, **caractérisé en ce qu'**il consiste avant le positionnement du dispositif de réservation (**1**) contre le panneau de coffrage (**2a**) :
- à définir une configuration pour le dispositif de réservation ;
- à assembler entre eux les modules de réservation (**5**) selon la configuration choisie ;
- à procéder à un traçage sur le panneau de coffrage pour le positionnement du dispositif de réservation.

12. - Procédé selon la revendication 10, **caractérisé en ce qu'**il consiste à obturer l'extrémité du ou des fourreaux (**10**), en fixant sur le panneau de coffrage (**2a**), des couvercles d'obturation des fourreaux (**10**) et à positionner le dispositif de réservation (**1**), de manière que les extrémités des fourreaux viennent s'engager chacun dans un couvercle d'obturation.

13. - Procédé selon la revendication 10, **caractérisé en ce qu'**il consiste à obturer l'extrémité (**10b**) d'un fourreau en le faisant coopérer avec un couvercle d'obturation fixé sur le module de réservation (**5**).

## Patentansprüche

1. Aussparungsvorrichtung von Rohrleitungsdurchgängen beim Gießen einer Wand in einer Schalung, umfassend mindestens ein Modul (5), umfassend einen rohrförmigen Ring (6), der eine Längsachse (X) aufweist und außen von einem Verankerungsträger (7) getragen wird, der sich außen und quer zu der Achse des rohrförmigen Rings erstreckt und zwei Querflächen (8) aufweist, die entlang der Längsachse ausgerichtet sind, der Träger (7) umfassend einen Rahmen (13) mit mindestens vier Seiten (12), der stellenweise mit der Außenseite des rohrförmigen Rings (6) verbunden ist, der durch eine durchbrochene Verbindungsstruktur (18), die eine Reihe von Räumen (15a) aufweist, die zusammen eine Öffnung (15) definieren, die sich auf beiden Seiten des Trägers entlang seiner Flächen (8) öffnet, um den Durchgang des Gießmaterials zu gewährleisten, der Träger (7) umfassend Stützfüße (21), die sich in Verlängerung des Rahmens (13) von einer der Flächen (8) des Rahmens erstrecken, wobei der rohrförmige Ring (6) mit einem Zusammenbausystem (11) versehen ist, das eine lösbare Verbindung zwischen dem Träger (7) und einer Hülse (10), umfassend zwei gegenüberliegende Enden (10b), gewährleistet, wobei die Vorrichtung, umfassend die Hülse (10) und den rohrförmigen Ring (6), als Zusammenbausystem (11) mit einer inneren Oberfläche zum Einpassen der Hülse (10) versehen ist, die im Inneren des rohrförmigen Rings (6) montiert ist, um nach der Verankerung des Trägers in der Wand aus dem Träger (7) herausgezogen werden zu können, wobei sich die Hülse (10) entlang der Längsachse über eine Länge erstreckt, die mindestens gleich wie die Stärke des Trägers (7) ist, wobei sich eines der Enden in einer Ebene erstreckt, die mit der Querfläche (8) des Trägers zusammenfällt, die das Ende der Stützfüße (21) enthält, und sich deren anderes Ende in einer Ebene erstreckt, die in Bezug auf die gegenüberliegende Querfläche (8) hervorsteht.

2. Aussparungsvorrichtung nach Anspruch 1, **dadurch gekennzeichnet, dass** das Zusammenbausystem (11) der Hülse (10) mit dem rohrförmigen Ring (6) durch konisches Einpassen oder mit Presssitz erfolgt.

3. Aussparungsvorrichtung nach einem der Ansprüche 1 bis 2, **dadurch gekennzeichnet, dass** das Zusammenbausystem (11) der Hülse (10) im Inneren des rohrförmigen Rings (6) Unebenheiten aufweist, die auf dem rohrförmigen Ring (6) und/oder auf der äußeren Oberfläche (10a) des Rohrs (10) ausgebildet sind.

4. Aussparungsvorrichtung nach einem der Ansprüche 1 bis 3, **dadurch gekennzeichnet, dass** die Seiten (12) des Rahmens (13) außen durchgehende ebene Auflageflächen (12a) für weitere Aussparungsmodule (5) aufweisen.

5. Aussparungsvorrichtung nach einem der Ansprüche 1 bis 4, **dadurch gekennzeichnet, dass** der Rahmen (13) des Trägers (7) mit Zusammenbausystemen (23) für mindestens ein weiteres Aussparungsmodul versehen ist.

6. Aussparungsvorrichtung nach einem der Ansprüche 1 bis 5, **dadurch gekennzeichnet, dass** sie mindestens zwei Aussparungsmodule (5) umfasst, die auf zwei benachbarten Seiten (12) der Rahmen aufliegen und mittels Zusammenbausystemen (23) fest miteinander verbunden sind.

7. Aussparungsvorrichtung nach Anspruch 5 oder 6, **dadurch gekennzeichnet, dass** sie als Zusammenbausysteme (23) Klammern aufweist, die jeweils zwei benachbarte Seiten von zwei Rahmen, die zu verschiedenen Modulen gehören, einklemmen.

8. Aussparungsvorrichtung nach Anspruch 7, **dadurch gekennzeichnet, dass** die Seiten (12) eines Rahmens (13) über mindestens einen Teil ihrer Länge eine konstante Stärke für die Montage einer Klammer (23) zum Zusammenbau eines weiteren Aussparungsmoduls besitzen.

9. Aussparungsvorrichtung nach einem der Ansprüche 1 bis 8, **dadurch gekennzeichnet, dass** der Träger (7) mit einem Verschlussdeckel eines der Enden (10b) der Hülse (10) ausgestattet ist, der sich entlang einer Querseite des Trägers (7) erstreckt.

10. Verfahren zum Bilden einer Aussparung in einer Betonwand mittels einer Vorrichtung nach einem der Ansprüche 1 bis 9, **dadurch gekennzeichnet, dass** es die folgenden Schritte umfasst:
- Aufstellen mindestens einer Schalungsplatte (2a);
- Aufstellen mindestens eines Gerüsts (30);
- Positionieren der Aussparungsvorrichtung (1) nach einem der Ansprüche 1 bis 9 in Kontakt mit der Schalungsplatte;
- Befestigen der Aussparungsvorrichtung (1) an dem Gerüst;
- Verschließen der Enden der Hülse(n) (10) der Aussparungsvorrichtung (1);
- Gießen des Betons in die Innenseite der Schalungsplatte(n) (2a, 2b) und Sicherstellen des Durchgangs des Betons durch die Öffnung (15) der Flächen des Rahmens bzw. der Rahmen (13) der Vorrichtung (1);
- Ausschalen nach dem Trocknen;
- Entfernen der Hülsen (10) aus der so gebildeten Wand.

11. Verfahren nach Anspruch 10, **dadurch gekennzeichnet, dass** es vor der Positionierung der Aussparungsvorrichtung (1) gegen die Schalungsplatte (2a) aus Folgendem besteht:
- Definieren einer Konfiguration für die Aussparungsvorrichtung;
- Zusammenbauen der Aussparungsmodule (5) miteinander entsprechend der gewählten Konfiguration;
- Ausführen einer Anzeichnung auf der Schalungsplatte zum Positionieren der Aussparungsvorrichtung.

12. Verfahren nach Anspruch 10, **dadurch gekennzeichnet, dass** es darin besteht, das Ende der Hülse(n) (10) zu verschließen, indem auf der Schalungsplatte (2a) Verschlussdeckel der Hülsen (10) befestigt werden, und die Aussparungsvorrichtung (1) zu positionieren, sodass die Enden der Hülsen jeweils in einen Verschlussdeckel eingreifen.

13. Verfahren nach Anspruch 10, **dadurch gekennzeichnet, dass** es darin besteht, das Ende (10b) einer Hülse zu verschließen, indem es mit einem Verschlussdeckel zusammenwirkt, der an dem Aussparungsmodul (5) befestigt ist.

## Claims

1. - A device for reserving pipe passages when pouring a wall into a formwork, including at least one module (**5**) comprising a tubular ring (**6**) having a longitudinal axis (**X**) and supported externally by an anchoring support (**7**) extending outwardly and transversely to the axis of the tubular ring, having two transverse faces (**8**) oriented along the longitudinal axis, the support (**7**) including a frame (**13**) with at least four sides (**12**), punctually connected with the outside of the tubular ring (**6**) that is secured to the frame (**13**) by a perforated connecting structure (**18**) having a series of spaces (**15a**) together defining the opening (**15**) that opens on both sides of the support along its faces (**8**), to ensure the passage of the casting material, the support (**7**) including support feet (**21**) extending in the extension of the frame (**13**) from one of the faces (**8**) of the frame, the tubular ring (**6**) being provided with an assembly system (**11**) providing a removable connection between the support (**7**) and a sleeve (**10**) including two opposite ends (**10b**), the device including the sleeve (**10**) and the tubular ring (**6**) being provided as assembly system (**11**), with an inner surface for the interlocking of the sleeve (**10**) mounted inside the tubular ring (**6**) to be able to be removed from the support (**7**) after the support has been anchored in the wall, the sleeve (**10**) extending along the longitudinal axis over a length at least equal to the thickness of the support (**7**) with one of the ends extending in a plane coinciding with the transverse face (**8**) of the support containing the end of the support feet (**21**) and the other end of which extends in a plane protruding relative to the opposite transverse face (**8**).

2. - The reservation device according to claim 1, **characterized in that** the assembly system (**11**) of the sleeve (**10**) with the tubular ring (**6**) is conically interlocking or with a tight fit.

3. - The reservation device according to one of claims 1 to 2, **characterized in that** the assembly system (**11**) of the sleeve (**10**) inside the tubular ring (**6**) has asperities arranged on the tubular ring (**6**) and/or on the outer surface (**10ₐ**) of the tube (**10**).

4. - The reservation device according to one of claims 1 to 3, **characterized in that** the sides (**12**) of the frame (**13**) externally have continuous flat bearing surfaces (**12a**) for other reservation modules (**5**).

5. - The reservation device according to one of claims 1 to 4, **characterized in that** the frame (**13**) of the support (**7**) is provided with assembly systems (**23**) for at least one other reservation module.

6. - The reservation device according to one of claims 1 to 5, **characterized in that** it includes at least two reservation modules (**5**) resting on two adjacent sides (**12**) of the frames and secured to one another by means of the assembly systems (**23**).

7. - The reservation device according to claims 5 or 6, **characterized in that** it comprises, as assembly systems (**23**), staples each pinching two adjacent sides of two frames belonging to different modules.

8. - The reservation device according to claim 7, **characterized in that** the sides (**12**) of a frame (**13**) have, over at least a part of their length, a constant thickness for mounting an assembly staple (**23**) of another reservation module.

9. - The reservation device according to one of claims 1 to 8, **characterized in that** the support (**7**) is equipped with a cover for closing one end (**10b**) of the sleeve (**10**), extending along a transverse face of the support (**7**).

10. - A method for forming a reservation in a concrete wall using a device according to one of claims 1 to 9, **characterized in that** it includes the following steps:
- placing at least one formwork panel (**2a**);
- placing at least one armature (**30**);
- positioning the reservation device (**1**) according to one of claims 1 to 9 in contact with the formwork panel;
- attaching the reservation device (**1**) to the armature;
- closing the ends of the sleeve(s) (**10**) of the reservation device (**1**);
- pouring the concrete inside the formwork panel(s) (**2a**, **2b**) and ensuring that the concrete passes through the opening (**15**) of the faces of the frame(s) (**13**) of the device (**1**);
- stripping after drying;
- removing the sleeves (**10**) from the wall thus formed.

11. - The method according to claim 10, **characterized in that** it consists, before the positioning of the reservation device (**1**) against the formwork panel (**2a**), in:
- defining a configuration for the reservation device;
- assembling the reservation modules (**5**) to one another according to the chosen configuration;
- tracing on the formwork panel for the positioning of the reservation device.

12. - The method according to claim 10, **characterized in that** it consists in closing off the end of the sleeve(s) (**10**) by attaching, on the shuttering panel (**2a**), covers for closing the sleeves (**10**) and positioning the reservation device (**1**) so that the ends of the sleeves each engage in a closing cover.

13. - The method according to claim 10, **characterized in that** it consists in closing the end (**10b**) of a sleeve by making it engage with a closing cover attached on the reservation module (**5**).
